# EUROPÄISCHE PATENTSCHRIFT

(11) **EP 0 812 530 B1**
(45) Veröffentlichungstag und Bekanntmachung des Hinweises auf die Patenterteilung: **27.09.2000**
(21) Anmeldenummer: 97105762.5
(22) Anmeldetag: 08.04.1997
(51) Int. Cl.: A01D 41/14, A01D 41/12

(54) **Erntemaschine mit einem in seiner Arbeitslage gegenüber dem Boden höhenverstellbaren Vorsatzbearbeitungsgerät**
Harvesting machine with height-adjustable header
Moissonneuse à tablier à hauteur réglable

(30) Priorität: 14.06.1996 DE 19623754
(43) Veröffentlichungstag der Anmeldung: 17.12.1997
(73) Patentinhaber: CLAAS KGaA, 33428 Harsewinkel (DE)
(72) Erfinder: Eggenhaus, Georg, 48346 Ostbevern (DE)

(56) Entgegenhaltungen:
- EP-A- 0 631 906
- EP-A- 0 702 891
- WO-A-95/23496
- DE-A- 2 411 153
- DE-A- 2 900 841
- DE-C- 4 341 834
- FR-A- 2 530 921
- US-A- 4 124 970
- US-A- 4 204 383
- PATENT ABSTRACTS OF JAPAN vol. 007, no. 006 (P-167), 11.Januar 1983 & JP 57 165708 A (KUBOTA TEKKO KK), 12.Oktober 1982,

## Beschreibung

Die Erfindung bezieht sich auf eine Erntemaschine mit einem über eine Einstelleinrichtung in seiner Arbeitslage gegenüber dem Boden höhenverstellbaren Vorsatzbearbeitungsgerät, wobei das Vorsatzbearbeitungsgerät zusätzlich zur Arbeitslage mindestens einen weiteren über eine entsprechende Einstelleinrichtung einstellbaren Arbeitsparameter aufweist.

In der WO 95/23496 ist eine Vorrichtung zur Regelung des Bodenabstandes des Vorsatzbearbeitungsgerätes einer Erntemaschine, z.B. eines Mähdreschers mit einem höhenverstellbaren Schneidwerk, beschrieben. Zur Regelung des Bodenabstandes wird dort sowohl die Lage des Vorsatzbearbeitungsgerätes relativ zum Mähdrescher als auch der Abstand des Vorsatzbearbeitungsgerätes zum Boden gemessen, wobei die beiden Meßsignale einzeln oder in Kombination für die Regelung ausgewertet werden. Eine solche Vorrichtung bei einem Mähdrescher ermöglicht es auch bei unebenen Bodenverhältnissen, das Getreide in einer vorgegebenen Stoppelhöhe (Schnitthöhe) gleichmäßig abzuschneiden. Um ein gutes Ernteergebnis zu erzielen, wird die Schnitthöhe (Arbeitslage) jeweils den Erntebedingungen (z.B. Lagergetreide, stark verunkrautetes Getreide, normal stehender Bestand, Anmähfahrt/Wendefahrt) entsprechend vorgegeben.
Zusätlich zur Schnitthöhe des Schneidwerkes sind auch andere Arbeitsparameter des Schneidwerkes, insbesondere die Einstellung der am Schneidwerk drehbar gelagerten, motorisch ange-triebenen und die Aufnahme des Erntegutes unterstützenden Haspel, für einen optimalen Ernteerfolg wichtig.
Die Arbeitsparameter der am Schneidwerk angeordneten Haspel sind:
a) die Haspeldrehzahl mit der sich ein bestimmter Vorlauf oder auch ein Gleichlauf relativ zur Fahrgeschwindigkeit der Erntemaschine einstellen läßt,
b) die Höhe der Haspel in Bezug auf das Schneidwerk (vertikale Haspelverstellung),
c) die horizontale Lage der Haspel relativ zum Schneidwerk.

Diese Arbeitsparameter sind von der Bedienperson des Mähdreschers manuell, z.B. über entsprechende Schalter oder Taster, einstellbar, um eine optimale Aufnahme des Erntegutes in das Schneidwerk zu gewährleisten. Bei einem Wechsel der vorgegebenen Schnitthöhe durch die Bedienperson, z.B. bei einer Änderung der Erntebedingungen innerhalb eines Schlages, ist die Bedienperson zur Erzielung eines optimalen Ernteergebnisses gezwungen, die Arbeitsparameter der Haspel entsprechend der neu gewählten Schnitthöhe manuell einzustellen. Dies erfordert viel Erfahrung und eine große Konzentration der Bedienperson, da sehr schnell auf die veränderten Bedingungen reagiert werden muß. Besonders schwierig ist dies, wenn, wie bei einer Haspel, drei voneinander unabhängige Arbeitsparameter einstellbar sind. Nach mehreren Arbeitsstunden und bei Nachteinsätzen ist dies für die Bedienperson noch schwieriger, wobei durch Fehleinstellungen das Ernteergebnis verschlechtert wird oder sogar Schäden am Schneidwerk auftreten können.

Aufgabe der Erfindung ist es daher, eine Erntemaschiene mit einem in seiner Arbeitslage gegenüber dem Boden höhenverstell-baren Vorsatzbearbeitungsgerät, welches zusätzlich zur Höhenverstellung mindestens einen weiteren einstellbaren Arbeitsparameter aufweist, dahingehend zu verbessern, daß bei einer Änderung der Arbeitslage gegenüber dem Boden die Bedienperson von Einstellaufgaben bzgl. der anderen Arbeitsparameter entlastet wird.

Diese Aufgabe wird erfindungsgemäß durch die kennzeichnenden Merkmale des Patentanspruches 1 gelöst. Vorteilhafte Ausgestaltungsmerkmale und Ausführungen ergeben sich aus den Unteransprüchen.

Der Vorteil der erfindungsgemäßen Erntemaschine liegt darin, daß einstellbare Arbeitsparameter des Vorsatzbearbeitungsgerätes automatisch entsprechend der jeweiligen Arbeitslage (Arbeitshöhe über dem Boden) auf vorgewählte, optimale Werte einstellbar sind.
Hierzu weist die jeweilge Einstelleinrichtung für den jeweiligen Arbeitsparameter Mittel zur Abspeicherung von zu verschiedenen Arbeitslagen (Höhen) korrespondieren Sollwerten für den Arbeitsparameter auf. Entsprechend eines der Einstelleinrichtung zugeführten Arbeitslagesignals, welches ein Maß für die Lage (Höhe) des Vorsatzbearbeitungsgerätes über dem Boden darstellt, wird ein bestimmter Sollwert für den Arbeitsparameter aus dem Speicher ausgewählt, wobei automatisch der Arbeitsparameter über die Einstelleinrichtung auf den dem Arbeitslagesignal entsprechenden Wert eingestellt wird.

Dies bedeutet eine erhebliche Entlastung für die Bedienperson der Erntemaschiene, die sich somit verstärkt um die Kontrolle und Steuerung anderer Vorgänge in der Erntemaschine kümmern kann. Ermüdungserscheinungen und Konzentrationsschwächen infolge einer zu hohen Beanspruchung sowie Einstellunsicherheiten aufgrund von schlechten Sichtverhältnissen während eines Nachteinsatzes wird somit entgegengewirkt.

Darüber hinaus liegt ein weiterer Vorteil der Erfindung darin, daß unabhängig von der jeweilgen Bedienperson eine optimale arbeitslagenabhängige Einstellung der anderen Arbeitsparameter gewährleistet werden kann. So können zum Beispiel von einer erfahrenen Bedienperson während einer Erntefahrt optimal manuell eingestellte Arbeitsparameter für bestimmte Arbeitslagen als Sollwerte für eine automtische arbeitslagenabhängige Einstellung abgespeichert werden. Auf diese Werte kann die Bedienperson später zurückgreifen. Ebenso können auch andere noch nicht so erfahrene Bedienpersonen darauf zugreifen.

Neben der Abspeicherung von während der Erntefahrt optimal "erlernten" Sollwerten ist es auch vorgesehen, einzelne, mehrere oder auch alle bestimmten Sollwerte über ein Eingabemedium (Tastatur) beispielsweise durch längeres Drücken einer Taste als neue Istwerte einzugeben.
Zur Information der Bedienperson können die Sollwerte auf einem Display in der Fahrerkabine angezeigt werden.

An Hand der beigefügten Zeichnungen soll die Erfindung am Beispiel eines Mähdreschers mit einem in seiner Arbeitslage über dem Boden höhenverstellbaren Schneidwerk näher verdeutlicht werden. Es zeigt:
- Fig. 1: eine Seitenansicht eines Mähdreschers,
- Fig.2: eine detaillierte Darstellung des Schneidwerkes,
- Fig.3: eine im Mikroprozessor der Einstelleinrichtung für die Arbeitsparameter gespeicherte Korrelationstabelle für die Sollwerte,
- Fig.4: Eingangs- und Ausgangssignale der elektronischen Einstelleinrichtung für einen Arbeitsparameter.

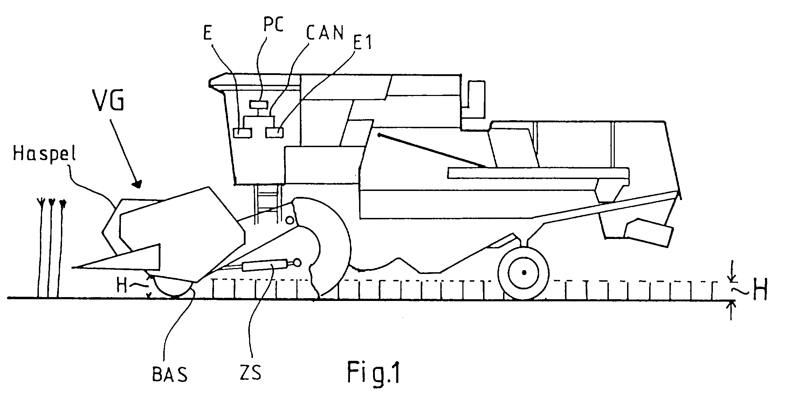

Der in Figur 1 dargestellte Mähdrescher besitzt als Vorsatzbearbeitungsgerät ein gegenüber dem Boden höhenverstellbares Schneidwerk (VG). Um die Höhenverstellbarkeit zu bewirken, ist das Schneidwerk (VG) über einen hydraulisch betätigten Steuerzylinder (ZS) in seiner Lage relativ zum Mähdrescher um eine Drehachse verstellbar. Über eine von der Fahrerkabine aus zu bedienende elektronische Einstelleinrichtung (E) wird ein Regelventil für die Versorgung des Steuerzylinders (ZS) mit Hydraulikflüssigkeit angesteuert. Die Arbeitslage (H) des Schneidwerkes (VG) entspricht der Schnitthöhe/Stoppelhöhe. Zur Bestimmung des Bodenabstandes ist am Schneidwerk (VG) mindestens ein Tastbügel als Bodenabstandssensor (BAS) angeordnet. Statt eines Tastbügels kann auch ein Ultraschallsensor oder ein Lasersensor oder eine Kombination dieser Sensoren als Bodenabstandssensor (BAS) dienen.

Bestandteil des Schneidwerkes als Vorsatzbearbeitungsgerät ist eine daran drehbar gelagerte, motorisch angetriebene und die Aufnahme des Erntegutes unterstützende Haspel. Mit der Haspel weist das Schneidwerk neben der Arbeitslage/Schnitthöhe drei weitere von der Fahrerkabine aus über elektronische Einstelleinrichtungen (E1,E2,E3) einstellbare Arbeitsparameter (Haspeldrehzahl, Höhe der Haspel gegenüber dem Schneidwerk, horizontale Position der Haspel relativ zum Schneidwerk) auf. In Fig.1 ist nur die Einstelleinrichtung (E1) für eine der Arbeitsparameter symbolisch dargestellt. Die Einstelleinrichtungen (E,E1,...) sind vorzugsweise über ein Kommunikationsnetzwerk (Bussystem, CAN Control Area Network) mit dem zentralen Steuerrechner (PC) des Mähdreschers verbunden.

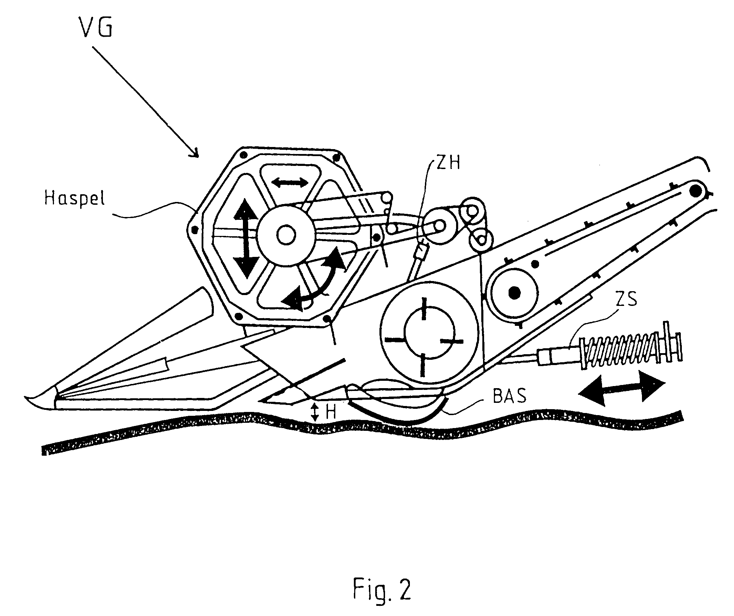

Fig.2 zeigt eine detaillierte Darstellung des Schneidwerkes (VG) mit der Haspel. Dort ist auch der hydraulische Steuerzylinder (ZH) für die Höhenverstellung der Haspel gegenüber dem Schneidwerk (VG) sowie der Antrieb für die Drehbewegung der Haspel (Haspeldrehzahl) eingezeichnet; nicht dargestellt ist der hydraulische Steuerzylinder für die Verstellung der Horizontalposition der Haspel.

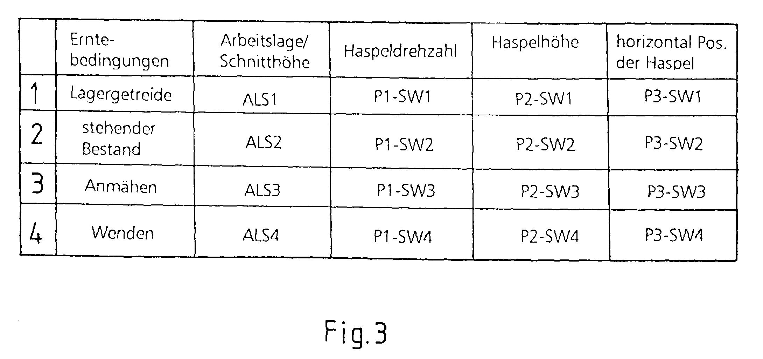

Als Mittel zur Abspeicherung von zu bestimmten Arbeitslagen (H) optimal korrespondierenden Sollwerten (SW) umfaßt eine jeweilige Einstelleinrichtung (E1,E2,E3) einen Mikroprozessor (µP), in dem eine Korrelationstabelle (vgl. Fig.3) abspeicherbar ist. Zwei oder mehrere Einstelleinrichtungen können dabei auch auf einen gemeinsamen Mikroprozessor zugreifen.

In Fig.3 ist eine Korrelationstabelle für vier unterschiedlichen Erntebedingungen entsprechende Arbeitslagen /Schnitthöhen gezeigt. Die Zuordnungen können von Schlag zu Schlag und von Getreidesorte zu Getreidesorte unterschiedlich sein. Die vier Arbeitslagen werden den Einstelleinrichtungen (E1,E2,E3) über die Arbeitslagesignale (ALS1 bis 4) angezeigt. Die verschiedenen Sollwerte sind mit "Pi-SWj" (i=1,2,3 und j= 1,2,3,4) gekennzeichnet.

Im folgenden werden für die vier Erntebedingungen beispielhaft tendenziell als gut erachtete Zuordnungswerte für die Haspeldrehzahl und die Haspelhöhe angegeben. Bei einer Erntefahrt in Lagergetreide mit einer Schnitthöhe (ALS1) von 80mm sind eine Haspeldrehzahl (P1-SW1), die einen erhöhten Vorlauf der Haspel gegenüber der Fahrgeschwindigkeit ermöglicht, sowie eine geringe Hapelhöhe günstig. Bei einem stehenden Bestand mit einer Schitthöhe (ALS2) von 120mm sind ein geringer Haspelvorlauf und eine den Ährenspitzen entsprechende Haspelhöhe günstig. Beim Anmähen mit einer Schnitthöhe (ALS3) von 200mm sind ein Haspelgleichlauf und eine den Ährenspitzen entsprechende Haspelhöhe günstig. Beim Wenden mit einer Schnitthöhe (ALS4) von 600mm sind ein geringer Haspelvorlauf und eine geringe Haspelhöhe günstig.

Die Abspeicherung der Sollwerte (Pi-SWj) kann einerseits dadurch erfolgen, daß ein manuell während der Erntefahrt manuell optimal eingestellter Arbeitsparameter für eine bestimmte Arbeitslage (ALSi) zwischengespeichert wird und als Sollwert (Pi-SWj) abgespeichert wird; andererseits ist es auch vorgesehen, daß die Sollwerte (Pi-SWj) der Arbeitsparameter für eine bestimmte Arbeitslage (ALSi) manuell vorgebbar und eingebbar sind.

Dabei ist es in einer Ausgestaltung vorgesehen, daß nur für bestimmte Arbeitslagen (diskrete Sollwertverteilung) innerhalb des höhenverstellbaren Arbeitslagebereiches des Vorsatzbearbeitungsgerätes (VG) Sollwerte (SW) für den Arbeitsparameter abgespeichert sind.
In einer alternativen Ausgestaltung ist es vorgesehen, daß der höhenverstellbare Arbeitslagebereich des Vorsatzbearbeitungsgerätes (VG) in Intervalle eingeteilt ist und jedem Intervall ein Sollwert (SW) für den jeweiligen Arbeitsparameter entspricht.
In einer weiteren Ausgestaltung ist es vorgesehen, daß die Sollwerte (SW) für den jeweiligen Arbeitsparameter kontinuierlich über den gesamten höhenverstellbaren Arbeitslagebereich des Vorsatzbearbeitungsgerätes (VG) verteilt sind.

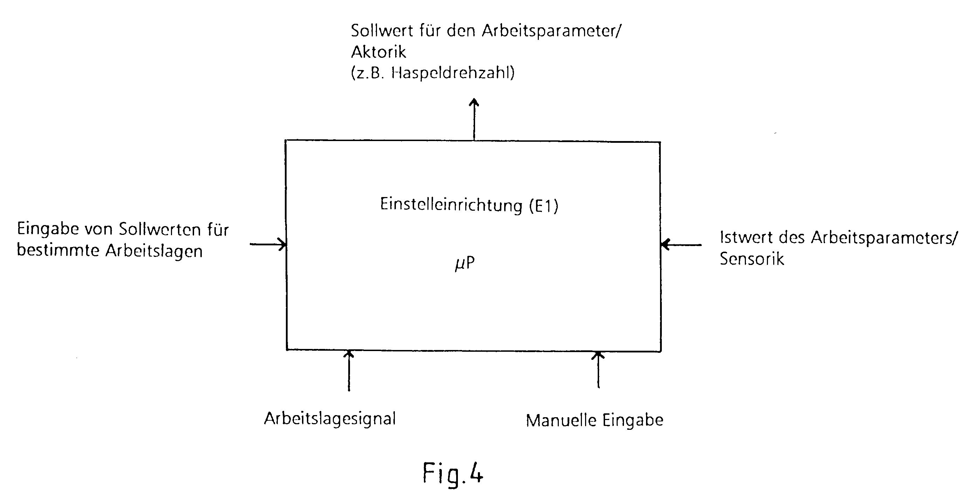

Die elektronische Einstelleinrichtung (E1)- vgl. Fig.4- empfängt zur Auswahl des zur jeweilgen Arbeitslage gehörenden Sollwertes (SW) ein Arbeitslagesignal (ALS).
Dabei kann das Arbeitslagesignal (ALS) dem an der Einstelleinrichtung (E) für die Arbeitslage (H) eingestellten Sollwert entsprechen, der zum Beispiel durch Drücken einer bestimmten Taste in der Fahrerkabine eingestellt wird. Alternativ dazu kann das Arbeitslagesignal (ALS) von dem am Schneidwerk (VG) angeordneten Bodenabstandssensor (BAS) erzeugt werden. Ferner ist es vorgesehen, daß das Arbeitslagesignal (ALS) von einem an der Erntemaschine angeordneten Lagesensor, der die Lage des Vorsatzbearbeitungsgeräte (VG) relativ zur Erntemaschine erfaßt, erzeugt wird. Auch eine Kombination von Bodenabstandssensor (BAS) und Lagesensor zur Erzeugung des Arbeitslagesignales (ALS) ist vorgesehen.

Im Fall einer manuellen Bedienung (Übersteuerung) der Einstelleinrichtung (E1) für einen Arbeitsparameter wird die automatische arbeitslagenabhängige Einstellung automatisch abgeschaltet.

Mit Hilfe einer in der Fahrerkabine angeordneten Automatiktaste kann automatisch die arbeitslagenabhängige Einstellung wieder aktiviert werden.

Bei Schneidwerken (VG) mit einer variabel einstellbaren Schneidmuldenlänge ergibt sich ein weiterer in Abhängigkeit von der Schnitthöhe einstellbarer Arbeitsparameter.

Die automatische arbeitslagen/schnitthöhenabhängige Einstellung muß nicht notwendigerweise alle möglichen einstellbaren Arbeitsparameter umfassen, sondern kann sich auch auf einen oder mehrere bestimmte beschränken.

Die Erfindung ist nicht auf Mähdrescher mit Schneidwerken als Vorsatzbearbeitungsgeräten beschränkt. Vielmehr sind Mähdrescher mit einem Maispflückervorsatzgerät ebenso in vorteilhafter Weise erfindungsgemäß auszuführen. Dabei läßt sich die Umlaufgeschwindigkeit der auf Pflückplatten angeordneten Ketten mit den Pflückfingern sowie der Pflückplattenabstand erfindungsgemäß in Abhängigkeit von der Arbeitshöhe des Maispflückervorsatzgerätes einstellen. Auch bei einem Feldhächsler mit einem Maisgebißvorsatz findet die Erfindung Anwendung, wobei die Umlaufgeschwindigkeit der Einzugketten in Abhängigkeit von der Arbeitshöhe des Maisgebißvorsatzgerätes erfindungsgemäß einstellbar ist. Auch bei einem Feldhächsler mit einem in seiner Arbeitslage gegenüber dem Boden höhenverstellbaren, geschnittenes Erntegut aus Schwaden aufnehmenden Aufnahmegerät (Pickup) findet die Erfindung in vorteilhafter Weise Anwendung, wobei die Umdrehungszahl der Aufnahmezinken automatisch arbeitslagenabhängig einstellbar ist.

## Patentansprüche

1. Erntemaschine mit einem in seiner Arbeitslage (H) über eine Einstelleinrichtung (E) gegenüber dem Boden (B) höhenverstellbaren Vorsatzbearbeitungsgerät (VG), wobei das Vorsatzbearbeitungsgerät zusätzlich zur Arbeitslage (H) mindestens einen weiteren über eine Einstelleinrichtung (E1) verstellbaren Arbeitsparameter aufweist,
dadurch gekennzeichnet,
daß die jeweilige Einstelleinrichtung (E1) für den Arbeitsparameter Mittel zur Abspeicherung von zu verschiedenen Arbeitslagen (H) korrespondierenden Sollwerten (SW) für den Arbeitsparameter des Vorsatzbearbeitungsgerätes (VG) aufweist, wobei entsprechend eines der Einstelleinrichtung (E1) zugeführten Arbeitslagesignals (ALS) ein bestimmter Sollwert (SW) für den Arbeitsparameter auswählbar ist und der Arbeitsparameter automatisch über die Einstelleinrichtung (E1) auf den dem Arbeitslagesignal (ALS) entsprechenden Sollwert (SW) einstellbar ist.

2. Erntemaschine nach Anspruch 1,
dadurch gekennzeichnet,
daß ein manuell wärend der Erntefahrt eingestellter Arbeitsparameter für eine bestimmte Arbeitslage (H) zwischengespeichert wird und als Sollwert (SW) für die automatische, arbeitslagenabhängige Einstellung abspeicherbar ist.

3. Erntemaschine nach Anspruch 1,
dadurch gekennzeichnet,
daß die Sollwerte (SW) für die Arbeitsparmeter für verschiedene Arbeitslagen (H) des Vorsatzbearbeitungsgerätes (VG) manuell vorgebbar und abspeicherbar sind.

4. Erntemaschine nach einem der vorstehenden Ansprüche,
dadurch gekennzeichnet,
daß im Fall der manuellen Bedienung der Einstelleinrichtung (E1) die auto matische arbeitslagenabhängige Einstellung automatisch ausgeschaltet wird.

5. Erntemaschine nach einem der vorstehenden Ansprüche, dadurch gekennzeichnet, daß nur für bestimmte Arbeitslagen (H) innerhalb des höhenverstellbaren Arbeitslagebereiches des Vorsatzbearbeitungsgerätes (VG) Sollwerte (SW) für den jeweiligen Arbeitsparameter abgespeichert sind.

6. Erntemaschine nach einem der Ansprüche 1 bis 4,
dadurch gekennzeichnet,
daß der höhenverstellbare Arbeitslagebereich des Vorsatzbearbeitungsgerätes (VG) in Intervalle eingeteilt ist und jedem Intervall ein Sollwert (SW) für den jeweiligen Arbeitsparameter entspricht.

7. Erntemaschine nach einem der Ansprüche 1 bis 4,
dadurch gekennzeichnet,
daß die Sollwerte (SW) für den jeweiligen Arbeitsparameter kontinuierlich über den gesamten höhenverstellbaren Arbeitslagebereiche des Vorsatzbearbeitungs gerätes (VG) verteilt sind.

8. Erntemaschine nach einem der vorstehenden Ansprüche,
dadurch gekennzeichnet,
daß die Einstelleinrichtung (E1) für den Arbeitsparameter einen Mikropro zessor (µP) mit einem integrierten Speicher für die Sollwerte (SW) umfaßt.

9. Erntemaschine nach einem der vorstehenden Ansprüche,
dadurch gekennzeichnet,
daß für zwei oder mehere Einstelleinrichtungen (E1,...) zur Einstellung ver schiedener Arbeitsparameter ein gemeinsamer Mikroprozessor (µP) vorgesehen ist.

10. Erntemaschine nach einem der vorstehenden Ansprüche,
dadurch gekennzeichnet,
daß die Einstelleinrichtung (E1)/Einrichtungen für die Arbeitsparameter des Vorsatzbearbeitungsgerätes (VG) über ein Kommunikati onsnetzwerk mit dem zentralen Steuerrechener (PC) der Erntemaschine verbunden sind.

11. Erntemaschine nach einem der vorstehenden Ansprüche,
dadurch gekennzeichnet,
daß das der Einstelleinrichtung (E1) für den jeweiligen Arbeitsparameter zuge führte Arbeitslagesignal (ALS) dem an der Einstelleinrichtung (E) für die Ar beitslage (H) eingestellten Sollwert entspricht.

12. Erntemaschine nach einem der Ansprüche 1 bis 10,
dadurch gekennzeichnet,
daß das der Einstelleinrichtung (E1) für den jeweiligen Arbeitsparameter zuge führte Arbeitslagesignal (ALS) von einem am Vorsatzbearbeitungsgerät (VG) angeordneten, die Arbeitshöhe (H) über dem Boden messenden Bodenab standssensor (BAS) erzeugt wird.

13. Erntemaschine nach Anspruch 12,
dadurch gekennzeichnet,
daß der Bodenabstandssensor (BAS) von mindestens einem Sensor für jede Seite gebildet ist.

14. Erntemaschine nach einem der Ansprüche 12 oder 13,
dadurch gekennzeichnet,
daß der Bodenabstandssensor (BAS) von mindestens einem Ultraschallsensor gebildet ist.

15. Erntemaschine nach einem der vorstehenden Ansprüche 12,13 oder 14,
dadurch gekennzeichnet,
daß der Bodenabstandssensor (BAS) von mindestens einem Laserstrahlsensor gebildet ist.

16. Erntemaschine nach einem der Ansprüche 1 bis 10,
dadurch gekennzeichnet,
daß das der Einstelleinrichtung (E1) für den jeweiligen Arbeitsparameter zugeführte Arbeitslagesignal (ALS) von einem an der Erntemaschine angeordneten Lagesensor, der die Lage des Vorsatzbearbeitungsgeräte (VG) relativ zur Erntemaschine erfaßt, erzeugt wird.

17. Erntemaschine nach einem der vorstehenden Ansprüche,
dadurch gekennzeichnet,
daß das der Einstelleinrichtung (E1) für den jeweiligen Arbeitsparameter zugeführte Arbeitslagesignal (ALS) eine Kombination der vom Bodenabstandssensor (BAS) und vom Lagesensor erzeugten Signale ist.

18. Erntemaschine nach einem der vorstehenden Ansprüche,
dadurch gekennzeichnet,
daß dieselbe von einem Mähdrescher mit einem in seiner Arbeitslage (H) gegenüber dem Boden höhenverstellbaren Schneidwerk (VG) mit einer Haspel gebildet ist, wobei die Höhe der Haspel gegenüber dem Schneidwerk (VG) automatisch arbeitslagenabhängig einstellbar ist.

19. Erntemaschine nach einem der vorstehenden Ansprüche,
dadurch gekennzeichnet,
daß dieselbe von einem Mähdrescher mit einem in seiner Arbeitslage (H) gegenüber dem Boden höhenverstellbaren Schneidwerk (VG) mit einer Haspel gebildet ist, wobei die Drehzahl der Haspel automatisch arbeitslagenabhängig einstellbar ist.

20. Erntemaschine nach einem der vorstehenden Ansprüche,
dadurch gekennzeichnet, daß dieselbe von einem Mähdrescher mit einem in seiner Arbeitslage (H) gegenüber dem Boden höhenverstellbaren Schneidwerk (VG) mit einer Haspel gebildet ist, wobei die horizontale Position der Haspel gegenüber dem Schneidwerk (VG) automatisch arbeitslagenabhängig einstellbar ist.

21. Erntemaschine nach einem der vorstehenden Ansprüche,
dadurch gekennzeichnet,
daß dieselbe von einem Mähdrescher mit einem in seiner Arbeitslage (H) gegenüber dem Boden höhenverstellbaren Schneidwerk (VG) gebildet ist, wobei die Schneidmuldenlänge des Schneidwerks (VG) automatisch arbeitslagenabhängig einstellbar ist.

22. Erntemaschine nach einem der vorstehenden Ansprüche 1 bis 17,
dadurch gekennzeichnet,
daß dieselbe von einem Mähdrescher mit einem in seiner Arbeitslage (H) gegenüber dem Boden höhenverstellbaren Maispflückervorsatzgerät mit mehreren Pflückplatten und und daran auf umlaufenden Ketten angeordneten Pflückfingern gebildet ist, wobei die die Pflückgeschwindigkeit der Ketten automatisch arbeitslagenabhängig einstellbar ist.

23. Erntemaschine nach einem der Ansprüche 1 bis 17 oder Anspruch 22,
dadurch gekennzeichnet,
daß dieselbe von einem Mähdrescher mit einem in seiner Arbeitslage (H) gegen über dem Boden höhenverstellbaren Maispflückervorsatzgerät mit mehreren Pflückplatten und und daran auf umlaufenden Ketten angeordneten Pfückfingern gebildet ist, wobei der Pflückplattenabstand automatisch arbeitslagenabhängig einstellbar ist.

24. Erntemaschine nach einem der Ansprüche 1 bis 17,
dadurch gekennzeichnet,
daß dieselbe von einem Feldhächsler mit einem in seiner Arbeitslage (H) gegenüber dem Boden höhenverstellbaren Maisgebißvorsatzgerät mit umlaufenden Einzugsketten gebildet ist, wobei die Umlaufgeschwindigkeit der Einzugsketten automatisch arbeitslagenabhängig einstellbar ist.

25. Erntemaschine nach einem der Ansprüche 1 bis 17,
dadurch gekennzeichnet,
daß dieselbe von einem Feldhächsler mit einem in seiner Arbeitslage (H) gegenüber dem Boden höhenverstellbaren, geschnittenes Erntegut aus Schwaden aufnehmenden Aufnahmegerät (Pickup) gebildet ist, wobei die Position eines an dem Aufnahmegerät angeordneten Niederhalters automatisch arbeitslagenabhängig einstellbar ist.

26. Erntemaschine nach einem der Ansprüche 1 bis 17 oder Anspruch 25,
dadurch gekennzeichnet,
daß dieselbe von einem Feldhächsler mit einem in seiner Arbeitslage (H) gegenüber dem Boden höhenverstellbaren, geschnittenes Erntegut aus Schwaden aufnehmenden Aufnahmegerät gebildet ist, wobei die Umdrehungszahl der Aufnahmezinken automatisch arbeitslagenabhängig einstellbar ist.

## Claims

1. A harvester having a front-mounted processing implement (VG) which is adjustable in respect of height in its working position (H) with respect to the ground (B) by way of an adjusting device (E), wherein the front-mounted processing implement in addition to the working position (H) has at least one further working parameter which is adjustable by way of an adjusting device (E1), characterised in that the respective adjusting device (E1) for the working parameter has means for the storage of reference values (SW) for the working parameter of the front-mounted processing implement (VG), said reference values corresponding to various working positions, wherein in accordance with a working position signal (ALS) supplied to the adjusting device (E1) a given reference value (SW) for the working parameter can be selected and the working parameter is automatically adjustable by way of the adjusting device (E1) to the reference value (SW) corresponding to the working position signal (ALS).

2. A harvester according to claim 1 characterised in that a working parameter which is manually set during the harvesting travel for a given working position (H) is put into intermediate storage and can be stored as the reference value (SW) for automatic adjustment in dependence on working position.

3. A harvester according to claim 1 characterised in that the reference values (SW) for the working parameters for various working positions (H) of the front-mounted implement (VG) can be manually preset and stored.

4. A harvester according to one of the preceding claims characterised in that in the case of manual actuation of the adjusting device (E1) the automatic adjustment which is dependent on the working position is automatically switched off.

5. A harvester according to one of the preceding claims characterised in that reference values (SW) for the respective working parameter are stored only for given working positions (H) within the adjustable-height working position range of the front-mounted implement (VG).

6. A harvester according to one of claims 1 to 4 characterised in that the adjustable-height working position range of the front-mounted implement (VG) is divided into intervals and a reference value (SW) for the respective working parameter corresponds to each interval.

7. A harvester according to one of claims 1 to 4 characterised in that the reference values (SW) for the respective working parameter are continuously distributed over the entire adjustable-height working position range of the front-mounted implement (VG).

8. A harvester according to one of the preceding claims characterised in that the adjusting device (E1) for the working parameter includes a microprocessor (µP) with an integrated memory for the reference values (SW).

9. A harvester according to one of the preceding claims characterised in that a common microprocessor (µP) is provided for two or more adjusting devices (E1,...) for adjusting various working parameters.

10. A harvester according to one of the preceding claims characterised in that the adjusting device (E1) /devices for the working parameters of the front-mounted implement (VG) are connected by way of a communication network to the central control computer (PC) of the harvester.

11. A harvester according to one of the preceding claims characterised in that the working position signal (ALS) which is fed to the adjusting device (E1) for the respective working parameter corresponds to the reference value which is set at the adjusting device (E) for the working position (H).

12. A harvester according to one of claims 1 to 10 characterised in that the working position signal (ALS) which is fed to the adjusting device (E1) for the respective working parameter is produced by a ground clearance sensor (BAS) which is arranged on the front-mounted implement (VG) and which measures the working height (H) above the ground.

13. A harvester according to claim 12 characterised in that the ground clearance sensor (BAS) is formed by at least one sensor for each side.

14. A harvester according to one of claims 12 and 13 characterised in that the ground clearance sensor (BAS) is formed by at least one ultrasonic sensor.

15. A harvester according to one of preceding claims 12, 13 and 14 characterised in that the ground clearance sensor (BAS) is formed by at least one laser beam sensor.

16. A harvester according to one of claims 1 to 10 characterised in that the working position signal (ALS) which is fed to the adjusting device (E1) for the respective working parameter is produced by a position sensor which is arranged on the harvester and which detects the position of the front-mounted implement (VG) relative to the harvester.

17. A harvester according to one of the preceding claims characterised in that the working position signal (ALS) which is fed to the adjusting device (E1) for the respective working parameter is a combination of the signals produced by the ground clearance sensor (BAS) and the position sensor.

18. A harvester according to one of the preceding claims characterised in that same is formed by a combine harvester with a cutting mechanism (VG) having a reel, the cutting mechanism being adjustable in respect of height in its working position (H) relative to the ground, wherein the height of the reel is adjustable automatically in dependence on working position relative to the cutting mechanism (VG).

19. A harvester according to one of the preceding claims characterised in that same is formed by a combine harvester with a cutting mechanism (VG) having a reel, the cutting mechanism being adjustable in respect of height in its working position (H) relative to the ground, wherein the speed of rotation of the reel is automatically adjustable in dependence on working position.

20. A harvester according to one of the preceding claims characterised in that same is formed by a combine harvester with a cutting mechanism (VG) having a reel, the cutting mechanism being adjustable in respect of height in its working position (H) relative to the ground, wherein the horizontal position of the reel is adjustable automatically in dependence on working position relative to the cutting mechanism (VG).

21. A harvester according to one of the preceding claims characterised in that same is formed by a combine harvester with a cutting mechanism (VG) adjustable in respect of height in its working position (H) relative to the ground, wherein the cutting trough length of the cutting mechanism (VG) is automatically adjustable in dependence on working position.

22. A harvester according to one of preceding claims 1 to 17 characterised in that same is formed by a combine harvester with a corn picking front-mounted implement which is adjustable in respect of height in its working position (H) relative to the ground and which has a plurality of picking plates and picking fingers which are arranged thereon on circulating chains, wherein the picking speed of the chains is automatically adjustable in dependence on working position.

23. A harvester according to one of preceding claims 1 to 17 or claim 22 characterised in that same is formed by a combine harvester with a corn picking front-mounted implement which is adjustable in respect of height in its working position (H) relative to the ground and which has a plurality of picking plates and picking fingers which are arranged thereon on circulating chains, wherein the picking plate spacing is automatically adjustable in dependence on working position.

24. A harvester according to one of claims 1 to 17 characterised in that same is formed by a forage harvester with a front-mounted corn tooth implement with circulating draw-in chains, which is adjustable in respect of height in its working position (H) relative to the ground, wherein the speed of circulation of the draw-in chains is automatically adjustable in dependence on working position.

25. A harvester according to one of claims 1 to 17 characterised in that same is formed by a forage harvester with a pick-up implement which is adjustable in respect of height in its working position (H) relative to the ground and which picks up cut crop material consisting of swathes, wherein the position of a hold-down means arranged on the pick-up implement is automatically adjustable in dependence on working position.

26. A harvester according to one of claims 1 to 17 or claim 25 characterised in that same is formed by a forage harvester with a pick-up implement which is adjustable in respect of height in its working position (H) relative to the ground and which picks up cut crop material consisting of swathes, wherein the speed of circulation of the pick-up prongs is automatically adjustable in dependence on working position.

## Revendications

1. Machine de récolte équipée d'un outil frontal (VG) qui, dans sa position de travail (H), peut être réglé en hauteur par rapport au sol (B) par l'intermédiaire d'un dispositif de réglage (E), l'outil frontal présentant, en plus de la position de travail (H), au moins un paramètre de travail supplémentaire réglable par l'intermédiaire d'un dispositif de réglage (E1), caractérisée par le fait que le dispositif de réglage (E1) pour le paramètre de travail, comporte des moyens pour mémoriser des valeurs de consigne (SW) pour le paramètre de travail de l'outil frontal (VG) qui correspondent à différentes positions de travail , une valeur de consigne (SW) donnée pour le paramètre de travail pouvant être sélectionnée en fonction d'un signal de position de travail (ALS) transmis au dispositif de réglage (E1) et le paramètre de travail étant réglé de manière automatique par l'intermédiaire du dispositif de réglage (E1) à la valeur de consigne (SW) correspondant au signal de position de travail (ALS).

2. Machine de récolte selon la revendication 1, caractérisée par le fait qu'un paramètre de travail réglé manuellement pendant la récolte pour une position de travail (H) déterminée est mémorisé temporairement et peut être mémorisée en tant que valeur de consigne (SW) pour le réglage automatique, en fonction de la position de travail.

3. Machine de récolte selon la revendication 1, caractérisée par le fait que les valeurs de consigne (SW) pour les paramètres de travail pour différentes positions de travail (H) de l'outil frontal (VG) peuvent être entrées manuellement et mémorisées.

4. Machine de récolte selon une des revendications précédentes, caractérisée par le fait que dans le cas d'une commande manuelle du dispositif de réglage (E1), le réglage automatique en fonction de la position de travail est automatiquement mis hors service.

5. Machine de récolte selon une des revendications précédentes, caractérisée par le fait que des valeurs de consigne (SW) pour le paramètre de travail concerné sont mémorisées seulement pour certaines positions de travail (H) à l'intérieur de la plage de réglage en hauteur des positions de travail de l'outil frontal (VG).

6. Machine de récolte selon une des revendications 1 à 4, caractérisée par le fait que de la plage de réglage en hauteur des positions de travail de l'outil frontal (VG) est divisée en intervalles et qu'à chaque intervalle correspond une valeur de consigne (SW) pour le paramètre de travail concerné.

7. Machine de récolte selon une des revendications 1 à 4, caractérisée par le fait que les valeurs de consigne (SW) pour le paramètre de travail concerné sont réparties de manière régulière sur toute la plage de réglage en hauteur des positions de travail de l'outil frontal (VG).

8. Machine de récolte selon une des revendications précédentes, caractérisée par le fait que le dispositif de réglage (E1) pour le paramètre de travail comprend un microprocesseur (µP) avec une mémoire intégrée pour les valeurs de consigne (SW).

9. Machine de récolte selon une des revendications précédentes, caractérisée par le fait qu'il est prévu pour deux dispositifs de réglage (E1,...) ou plus, un microprocesseur (µP) commun pour le réglage de différents paramètres de travail.

10. Machine de récolte selon une des revendications précédentes, caractérisée par le fait que le/les dispositif(s) de réglage (E1) pour les paramètres de travail de l'outil frontal (VG) est/sont relié(s) au calculateur de contrôle central (PC) de la machine de récolte par l'intermédiaire d'un réseau de communication.

11. Machine de récolte selon une des revendications précédentes, caractérisée par le fait que le signal de position de travail (ALS) transmis au dispositif de réglage (E1) pour le paramètre de travail concerné correspond à la valeur de consigne réglée au niveau du dispositif de réglage (E) de la position de travail (H).

12. Machine de récolte selon une des revendications 1 à 10, caractérisée par le fait que le signal de position de travail (ALS) transmis au dispositif de réglage (E1) pour le paramètre de travail concerné est généré par un senseur de distance du sol (BAS) disposé sur l'outil frontal (VG), qui mesure la hauteur de travail (H) par rapport au sol.

13. Machine de récolte selon la revendication 12, caractérisée par le fait que le senseur de distance du sol (BAS) est formé d'au moins un senseur pour chaque côté.

14. Machine de récolte selon une des revendications 12 ou 13, caractérisée par le fait que le senseur de distance du sol (BAS) est formé d'au moins un senseur à ultrasons.

15. Machine de récolte selon une des revendications 12, 13 ou 14, caractérisée par le fait que le senseur de distance du sol (BAS) est formé d'au moins un senseur à rayon laser.

16. Machine de récolte selon une des revendications 1 à 10, caractérisée par le fait que le signal de position de travail (ALS) transmis au dispositif de réglage (E1) pour le paramètre de travail concerné est généré par un senseur de position disposé sur la machine de récolte, qui détecte la position de l'outil frontal (VG) par rapport à la machine de récolte.

17. Machine de récolte selon une des revendications précédentes, caractérisée par le fait que le signal de position de travail (ALS) transmis au dispositif de réglage (E1) pour le paramètre de travail concerné est une combinaison des signaux générés par le senseur de distance du sol (BAS) et le senseur de position.

18. Machine de récolte selon une des revendications précédentes, caractérisée par le fait que la machine est une moissonneuse-batteuse pourvue d'un tablier de coupe (VG) réglable en hauteur par rapport au sol dans sa position de travail (H) avec un rabatteur, la hauteur du rabatteur par rapport au tablier de coupe (VG) étant réglée de manière automatique en fonction de la position de travail.

19. Machine de récolte selon une des revendications précédentes, caractérisée par le fait que la machine est une moissonneuse-batteuse pourvue d'un tablier de coupe (VG) réglable en hauteur par rapport au sol dans sa position de travail (H) avec un rabatteur, la vitesse de rotation du rabatteur étant réglée de manière automatique en fonction de la position de travail.

20. Machine de récolte selon une des revendications précédentes, caractérisée par le fait que la machine est une moissonneuse-batteuse pourvue d'un tablier de coupe (VG) réglable en hauteur par rapport au sol dans sa position de travail (H) avec un rabatteur, la position horizontale du rabatteur par rapport au tablier de coupe (VG) étant réglée de manière automatique en fonction de la position de travail.

21. Machine de récolte selon une des revendications précédentes, caractérisée par le fait que la machine est une moissonneuse-batteuse pourvue d'un tablier de coupe (VG) réglable en hauteur par rapport au sol dans sa position de travail (H), la longueur de coupe du tablier de coupe (VG) étant réglée de manière automatique en fonction de la position de travail.

22. Machine de récolte selon une des revendications 1 à 17, caractérisée par le fait que la machine est une moissonneuse-batteuse pourvue d'un cueilleur de maïs frontal réglable en hauteur par rapport au sol dans sa position de travail (H), avec plusieurs plaques cueilleuses et des doigts montés sur des chaînes mobiles, la vitesse de déplacement des chaînes étant réglée de manière automatique en fonction de la position de travail.

23. Machine de récolte selon une des revendications 1 à 17 ou 22, caractérisée par le fait que la machine est une moissonneuse-batteuse pourvue d'un cueilleur de maïs frontal réglable en hauteur par rapport au sol dans sa position de travail (H), avec plusieurs plaques cueilleuses et des doigts montés sur des chaînes mobiles, l'écartement entre plaques cueilleuses étant réglé de manière automatique en fonction de la position de travail.

24. Machine de récolte selon une des revendications 1 à 17, caractérisée par le fait que la machine est une ensileuse pourvue d'un bec maïs frontal réglable en hauteur par rapport au sol dans sa position de travail (H) avec des chaînes d'alimentation, la vitesse des chaînes d'alimentation étant réglée de manière automatique en fonction de la position de travail.

25. Machine de récolte selon une des revendications 1 à 17, caractérisée par le fait que la machine est une ensileuse pourvue d'un pick-up réglable en hauteur par rapport au sol dans sa position de travail (H) qui ramasse le produit coupé en andains, la position d'un tasseur placé sur le pick-up étant réglée de manière automatique en fonction de la position de travail.

26. Machine de récolte selon une des revendications 1 à 17 ou 25, caractérisée par le fait que la machine est une ensileuse pourvue d'un pick-up réglable en hauteur par rapport au sol dans sa position de travail (H) qui ramasse le produit coupé en andains, la vitesse de rotation des dents de ramas- ramassage étant réglée de manière automatique en fonction de la position de travail.
